# EUROPÄISCHE PATENTANMELDUNG

(11) **EP 2 842 739 A1**
(43) Veröffentlichungstag der Anmeldung: **04.03.2015**
(21) Anmeldenummer: 14169223.6
(22) Anmeldetag: 21.05.2014
(51) Int. Cl.: B32B 27/08, B32B 27/30, B32B 27/32, B65D 65/40, B32B 27/34, B32B 27/36

(54) **Folie zur Versiegelung gegen Polypropylen zur Abdichtung bei peelfähiger Öffnungscharakteristik**

(30) Priorität: 24.05.2013 DE 102013105376
(71) Anmelder: Buergofol GmbH, 93354 Siegenburg (DE)
(72) Erfinder: Schleicher, Franz, 85053 Ingolstadt (DE); Boutrid, Abdel-Kader, 93345 Siegenburg (DE)
(74) Vertreter: Schlief, Thomas P.

(57) **Zusammenfassung**

Es wird eine Siegelfolie zur Versiegelung gegen aus Polypropylen bestehende Füllgut-Behälter vorgestellt, wobei die Siegelfolie (1) aus mehreren Schichten (2, 3, 4, 5, 6) besteht, von denen eine Schicht eine zum Behälter weisende und gegen das Polypropylen zu siegelnde, peelfähige Siegelschicht (2) ist. Die erfindungsgemäße Siegelfolie zeichnet sich dadurch aus, dass die Siegelschicht (2) aus einer Mischung besteht, welche mindestens ein LDPE und mindestens ein mLLDPE enthält.

## Beschreibung

Die Erfindung betrifft eine Folie zur Versiegelung gegen aus Polypropylen bestehende Füllgut-Behälter, wobei die Folie aus mehreren Schichten besteht, von denen eine Schicht eine zum Behälter weisende peelfähige Siegelschicht ist.

Füllgut-Behälter werden in vielen Fällen mit einer Deckelfolie verschlossen, die zumeist eine Trägerschicht und eine Siegelfolie mit einer peelfähigen Siegelschicht umfasst. Gleichzeitig muss die Siegelfolie sich durch eine hohe Dichtigkeit im Siegelbereich auszeichnen.

Ist der Füllgut-Behälter beispielsweise ein Eimer aus Polypropylen, schützt die besagte Deckelfolie einschließlich der Siegelfolie vor dem Auslaufen des Eimerinhalts. Die Siegelfolie muss hierbei sehr gut mit dem Material des Behälters verbunden sein, wobei es von Vorteil ist, wenn sie sich auch um den äußeren Rand des Eimers rollt. Durch eine Abzugslasche kann die Deckelfolie ohne Probleme rückstandslos und ohne Abrisse abgezogen werden und zeigt insgesamt ein peelfähiges Verhalten.

Bei einer aus der DE 39 10 820 A1 bekannten Deckelfolie ist eine metallene Dichtschicht mit einer Polypropylen-Schicht verbunden, und auf dieser ist, dem Füllgut-Behälter zugewandt, eine peelbar verbindbare Schicht eines Heißsiegelmediums aufgebracht. Als Heißsiegelmedium dient vorzugsweise eine Polypropylen-Dispersion, der die Peelfähigkeit beeinflussende Füllstoffe, Extender, Pigmente oder dgl. Zusätze beigemischt sind.

Es ist die Aufgabe der vorliegenden Erfindung, eine neuartige Materialkombination für die Siegelschicht zu entwickeln, welche eine hervorragende Siegelung bei gleichzeitig hoher Dichtigkeit und guten mechanischen Eigenschaften bietet.

Diese Aufgabe wird bei der erfindungsgemäßen Siegelfolie dadurch gelöst, dass die Siegelschicht aus einer Mischung besteht, welche mindestens ein LDPE und mindestens ein mLLDPE enthält.

Hierbei wird unter LDPE ein Polyethylen mit stark verzweigten Polymerketten verstanden, die eine geringe Dichte zwischen 0,915 g/cm³ und 0,935 g/cm³ aufweisen ("LD" steht für "low density"). Unter dem Begriff mLLDPE wird ein unter Verwendung von Metallozen-Katalysatoren hergestelltes LLDPE verstanden, wobei ein LLDPE ein lineares Polyethylen niederer Dichte ist (im Bereich der o.g. LDPE), dessen Polymermolekül nur kurze Verzweigungen aufweist ("LLD" steht für "linear low density").

Überraschenderweise wurde gefunden, dass mit einer Mischung von bestimmten Polyethylen-Typen gegen Polypropylen (als Material des Füllgut-Behälters) ein geeignetes Peelverhalten erzielbar ist. Überraschend war das deshalb, da Polyethylen (PE) normalerweise mit Polypropylen (PP) nicht gesiegelt werden kann, schon gar nicht mit einem maßgeschneiderten Peelverhalten. Mit der erfindungsgemäßen Mischung aus LDPE und mLLDPE für die Siegelschicht hat es sich jedoch gezeigt, dass genau dies möglich ist.

Unter Polypropylen werden vorliegend Polypropylen-Homopolymere und Polypropylen-Copolymere verstanden.

Die erfindungsgemäße Siegelfolie weist besonders gute mechanische Eigenschaften hinsichtlich Reißfestigkeit und Robustheit auf. Die Dehnfähigkeit ist vorteilhafterweise klein, was das Schneiden von randseitig überstehender Siegelfolie nach der Versiegelung erleichtert und auch das Abziehen der Folie vom Behälter ermöglicht.

Die erfindungsgemäße Siegelfolie kann insbesondere bei allen Behältern eingesetzt werden, die aus Polypropylen bestehen, wobei das Polypropylen in verschiedensten Strukturen vorliegen kann. Zu diesen Behältern zählen z.B. Schalen (sog. Trays), Eimer, Becher, Ampullen, Tabletts etc. Deren Bodenteil wird meist durch Tiefzug oder Spritzguss hergestellt. Die Siegelfolie als Deck- oder Schutzfolie wird üblicherweise bei Temperaturen von ca. 175 °C bis 195 °C aufgesiegelt.

Es hat sich herausgestellt, dass es sogar möglich ist, die erfindungsgemäße Siegelschicht mit der besagten Mischung, welche mindestens ein LDPE und mindestens ein mLLDPE umfasst, sogar hervorragend zur Siegelung zu verwenden, wenn nur ein sehr schmaler Siegelrand - wie es meistens bei Eimern der Fall ist - zur Verfügung steht. Insbesondere konnte mit der erfindungsgemäßen Folie ein Rand mit einer Breite von weniger als 2 mm und sogar kleiner als 1,5 mm versiegelt werden.

Die erfindungsgemäße Siegelfolie erfüllt des Weiteren die Forderung, dass sie problemlos mit allen gängigen Methoden sterilisiert werden kann.

Die Siegelfolie kann aus zwei, drei, vier, fünf, sechs, sieben oder noch mehr Schichten bestehen.

Besonders bevorzugt ist in der Siegelschicht LDPE mit einem Gew.-% Anteil von 50% bis 99.9% enthalten, vorzugsweise zwischen 60% und 98% und besonders bevorzugt zwischen 65% und 95%. Ganz besonders bevorzugt liegt der Gew.-% Anteil von LDPE zwischen 70% und 90%.

Bevorzugt ist gleichfalls, dass mLLDPE in der Siegelschicht mit einem Gew.-% Anteil von 0,1% bis 50% enthalten ist, vorzugsweise zwischen 2% und 40% und besonders bevorzugt zwischen 5% und 35%. Ganz besonders bevorzugt liegt der Gew.-% Anteil von mLLDPE zwischen 10% und 30%. Die Siegelnahtfestigkeit der erfindungsgemäßen Siegelfolie gegen Polypropylen ist vorzugsweise kleiner als 20 N/15 mm, und besonders bevorzugt kleiner als 15 N/15 mm, gemessen nach DIN55529. Diese Werte zur Siegelnahtfestigkeit entsprechen einem guten Peel-Verhalten, worunter vorliegend eine Siegelnahtfestigkeit von 10-20 N/15 mm verstanden wird, oder sogar einem Easy-Peel-Verhalten, worunter vorliegend eine Siegelnahtfestigkeit von 6-10 N/15 mm verstanden wird. Ein Festverschluss, der oberhalb dieser Siegelnahtfestigkeitswerte besteht, liegt demnach gerade nicht vor.

Der Schmelzpunkt (peak melting temperature) des mindestens einen LDPE ist bevorzugt größer als 110°C, gemessen nach der DSC-Methode nach DIN53765 (Messung bei 2. Lauf und einer Aufheizrate von 10 Kelvin/min).

Auch der Schmelzpunkt (peak melting temperature) des mindestens einen mLLDPE ist bevorzugt größer als 110°C, ebenfalls gemessen nach der DSC-Methode nach DIN53765 (Messung bei 2. Lauf und einer Aufheizrate von 10 Kelvin/min).

Es ist vorteilhaft, wenn eine oder mehrere Schichten der Siegelfolie eine Barriere bilden. Eine Barrierefunktion kann insbesondere durch mindestens eine Polyamidschicht erhalten werden, welche insbesondere gegen Sauerstoff und Chemikalien schützt. Zusätzlich oder alternativ kann mindestens eine EVOH-Schicht als Barriereschicht vorgesehen sein, insbesondere als Schutz gegen Sauerstoff und Wasserdampf. Der oder die Barriereschichten sind vorzugsweise als innenliegende Schicht(en) der Siegelfolie ausgebildet. Im Falle einer Polyamidschicht kann diese auch außen auf der der Siegelschicht abgewandten Seite vorgesehen sein.

Eine Barriereschicht kann aber auch durch eine Beschichtung erhalten werden, beispielsweise aus Aluminium (d.h. eine metallisierte Folie) oder aus SiOₓ. Diese Beschichtung kann sowohl auf eine Außenseite der erfindungsgemäßen Folie aufgebracht sein, als auch auf eine Außenseite der verwendeten Trägerfolie.

Vorzugsweise weist die Siegelschicht eine Dicke von mehr als 10 µm, vorzugsweise von mehr als 20 µm, auf. Auch sind Ausführungsformen vorteilhaft, bei denen die Siegelschicht eine Dicke von mehr als 30 µm, vorzugsweise von mehr als 35 µm, aufweist.

Die Erfindung umfasst gleichfalls eine Deckelfolie zum Verschließen und Versiegeln eines Füllgut-Behälters, wobei die Deckelfolie durch Aufkaschierung mindestens einer Trägerschicht auf die zuvor beschriebene Siegelfolie erhalten wird. Die Trägerschicht gibt der Deckelfolie die mechanische Steifigkeit und Robustheit. Die Kaschierung kann beispielsweise mit lösemittelfreien (LF) - das ist die bevorzugte Variante - oder lösemittelhaltigen (LH) Klebern erfolgen. Gemäß einer Alternative ist eine Extrusionskaschierung möglich.

Die mindestens eine Trägerschicht der Deckelfolie ist vorzugsweise eine OPET-Folie (orientiertes Polyester), eine OPA-Folie (orientiertes Polyamid), eine CPA-Folie (Cast Polyamid), eine PBT-Folie (Polybutylenterephthalat) oder eine OPP-Folie (orientiertes Polypropylen). Diese Materialien haben sich allesamt als geeignet erwiesen, um insbesondere hohen mechanischen Belastungen standzuhalten.

Die mindestens eine Trägerschicht weist vorteilhafterweise eine Dicke von 5 µm bis 100 µm auf, vorzugsweise zwischen 10 µm und 75 µm und bevorzugt zwischen 10 µm und 30 µm.

Es hat sich gezeigt, dass die erfindungsgemäße Deckelfolie derart fest mit einem Eimer verbunden werden kann, dass sie auch beim Umdrehen des Eimers sicher auf dem Behälter bleibt.

Ein weiterer Aspekt der vorliegenden Erfindung betrifft einen Füllgut-Behälter bestehend aus Polypropylen, wobei dieser Behälter mit besagter Deckelfolie verschlossen und versiegelt ist und des Weiteren einen Verschlussdeckel aufweist, der über der Deckelfolie platziert ist und randseitig am Behälterrand eingreift (wie dies beispielsweise weithin von Gebinden mit Farben, flüssigen Lebensmitteln etc. bekannt ist).

Es ist vorteilhaft, wenn der Siegelrand des vorgenannten Füllgut-Behälters eine Breite, d.h. eine Kontaktfläche zwischen dem Behälterrand des Füllgut-Behälters und der Deckelfolie, aufweist, die kleiner als 2,5 mm, vorzugsweise kleiner als 2 mm, besonders bevorzugt kleiner als 1,5 mm, ist.

Die erfindungsgemäße Deckelfolie (welche die Siegelfolie umfasst) ist vorzugsweise bedruckbar ausgebildet. Des Weiteren ist es möglich, dass die Deckelfolie optisch transparent ausgebildet ist; Einfärbungen der Folie sind möglich.

Die Erfindung betrifft ebenfalls die Verwendung einer wie vorbeschriebenen Siegelfolie oder Deckelfolie zur Versiegelung bzw. Verdeckelung eines Behälters aus Polypropylen.

Eine Verarbeitung bzw. Anbringung der erfindungsgemäßen Deckelfolie auf Füllgut-Behältern ist auf gängigen Anlagen ohne weiteres möglich. Hierzu zählen z.B. bei Eimerabfüllungen Anlagen der Firma Miromatic. Auch sind Heißabfüllungen und Abfüllungen mit Packungsüberdruck möglich. Die Versiegelung gelingt sowohl mit glatten als auch mit strukturierten Siegelbacken. Bevorzugt sind strukturierte Siegelbacken, z.B. mit einem sog. Waffelmuster.

Im Folgenden wird die Erfindung anhand eines Ausführungsbeispiels genauer erläutert. Es zeigen:
- **Fig. 1**: einen Füllgut-Behälter in Draufsicht, und
- **Fig. 2**: eine Detailansicht des Füllgut-Behälters der Fig. 1 in Seitenansicht (Schnittdarstellung).

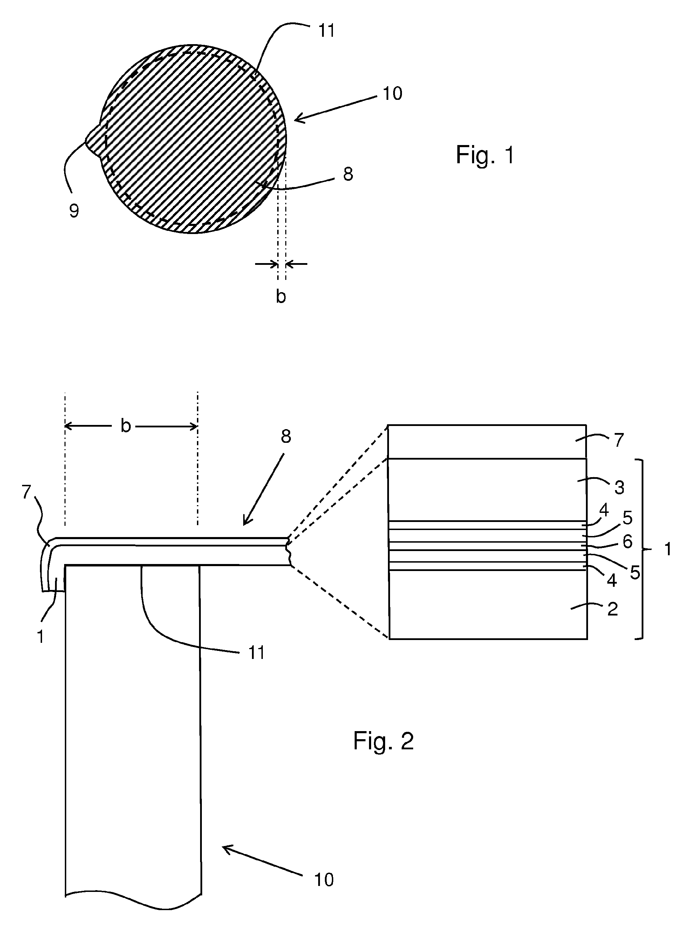

In der Figur 1 ist ein Füllgut-Behälter 10 aus Polypropylen von oben dargestellt, dessen Öffnungsrand mit einer Deckelfolie 8 versiegelt und abgedichtet ist. Der Siegelrand 11 (deren innere Kontur der Klarheit wegen als gestrichelte Linie dargestellt ist) weist eine Breite b auf. Zudem ist randseitig an der Deckelfolie 8 eine Lasche 9 vorgesehen, mit der die Deckelfolie 8 vom Füllgut-Behälter 10 abgezogen werden kann.

In der Figur 2 ist ein Schnitt durch den Rand eines Füllgut-Behälters 10 dargestellt, wobei auch hier der Siegelrand 11 mit der Breite b, beispielsweise 1,5 mm, gezeigt ist. Die Deckelfolie 8 besteht aus der Siegelfolie 1 und der Trägerschicht 7, die beispielsweise aufeinander kaschiert sind. Die Siegelfolie 1 weist eine zum Siegelrand 11 weisende Siegelschicht 2 auf, während die dem Siegelrand 11 abgewandte Außenschicht 3 der Siegelfolie 1 mit der Trägerschicht 7 verbunden ist (durch Kaschierung oder Extrusion).

Die Siegelfolie 1 weist vorliegend sieben Schichten auf. Von der Siegelschicht 2 ausgehend folgt eine Haftvermittlerschicht 4, dann eine Polyamidschicht 5 als Barriereschicht, eine EVOH-Schicht 6 als weitere Barriereschicht, noch eine Polyamidschicht 5, wiederum eine Haftvermittlerschicht 4 und schließlich die besagte Außenschicht 3, beispielsweise eine LDPE-Schicht.

Die Siegelschicht 2 weist erfindungsgemäß eine Mischung aus LDPE und mLLDPE auf.

Wie des Weiteren der Figur 2 zu entnehmen ist, ist die Deckelfolie 8 nahe dem Siegelrand 11 auch mit der Außenseite des Füllgut-Behälters 10 verschmolzen.

Im Folgenden werden verschiedene Vergleichsbeispiele (Folien V1-V3) und erfindungsgemäße Beispielfolien (Folien B1-B5) vorgestellt, deren Siegelnahtfestigkeiten geprüft wurden.

### I. Verwendete Materialien

Das in den Beispielen B1-B5 verwendete LDPE in den jeweiligen Siegelschichten ist Lupolen 2420 F von der Firma LyondellBasell Polymers.

Das in den Beispielen B1-B5 verwendete mLLDPE ist Exceed 1018 EB von der Firma ExxonMobil Chemical Company. Dieses ist ein mittels Metallocen-Katalyse hergestelltes Ethylen-Copolymer, bei dessen Polymerisation neben Ethylen Hexen als weiteres Co-Monomer eingesetzt wird.

Inspire 137 ehemals von Dow Chemical, nun von Braskem, ist ein Polypropylen.

Moplen EP240H ist ein nukleiertes heterophasiges Polypropylen-Copolymer von LyondellBasell.

Borpeel WD255CF der Borealis GmbH ist ein Polypropylen (PP).

Lupolen 3010D ist ein LDPE von LyondellBasell Polymers.

Durethan C38 F von Lanxess ist ein Copolyamid mittlerer Viskosität.

Admer QB510E von Mitsui Chemicals ist ein auf Polypropylen basierender Haftvermittler.

Admer NF498E von Mitsui Chemicals ist ein mit Maleinsäureanhydridgruppen modifiziertes LDPE, besitzt eine große Adhäsion zu PET, EVOH und PA, ist sehr gut verarbeitbar sind und weist eine thermische Stabilität auf, die äquivalent zu gewöhnlichem PE ist.

EVAL T101 B von der Firma EVAL Europe ist ein Polymer auf Ethylen-Vinylalkohol-Copolymer-Basis (EVOH).

### II. Vermessene Folien

Die folgenden Folien wurden vermessen, wobei sie vor der Messung jedoch noch auf eine 15 µm dicke OPA- oder eine 12 µm dicke OPET-Folie kaschiert wurden (s.u.).

**Vergleichsbeispiel 1 (V1): Fest siegelnde Folie, mit PA in Schicht 3**

| Schicht-Nummer | Zusammensetzung | Anteil in Schicht in % | Dicke in µm |
|---|---|---|---|
| 1 | Inspire 137 | 100 | 25 |
| 2 | Admer QB510E | 100 | 3 |
| 3 | Durethan C38 F | 100 | 5 |
| 4 | Admer QB510E | 100 | 3 |
| 5 (Siegelschicht) | Inspire 137 | 100 | 25 |
| | | | Summe: 61 µm |

**Vergleichsbeispiel 2 (V2): Fest siegelnde Folie, mit EVOH in Schicht 3**

| Schicht-Nummer | Zusammensetzung | Anteil in Schicht in % | Dicke in µm |
|---|---|---|---|
| 1 | Moplen EP240H | 100 | 20 |
| 2 | Admer QB510E | 100 | 3 |
| 3 | EVALT101B | 100 | 5 |
| 4 | Admer QB510E | 100 | 3 |
| 5 (Siegelschicht) | Moplen EP240H | 100 | 20 |
| | | | Summe: 51 µm |

**Vergleichsbeispiel 3 (V3): Unzureichend siegelnde Folie**

| Schicht-Nummer | Zusammensetzung | Anteil in Schicht in % | Dicke in µm |
|---|---|---|---|
| 1 | Moplen EP240H | 100 | 25 |
| 2 | Moplen EP240H | 100 | 20 |
| 3 (Siegelschicht) | Borpeel WD255CF | 100 | 25 |
| | | | Summe: 70 µm |

### Beispiel 1 (B1):

Peelfähige Folie, mit PA in Schicht 3; Verhältnis LDPE zu mLLDPE 80:20

| Schicht-Nummer | Zusammensetzung | Anteil in Schicht in % | Dicke in µm |
|---|---|---|---|
| 1 | Lupolen 3010 D | 100 | 25 |
| 2 | Admer NF498 E | 100 | 3 |
| 3 | Durethan C38 F | 100 | 5 |
| 4 | Admer QB510E | 100 | 3 |
| 5 (Siegelschicht) | ● Lupolen 2420 F | ● 80 | 25 |
| | ● Exceed 1018 EB | ● 20 | |
| | | | Summe: 61 µm |

### Beispiel 2 (B2):

Peelfähige Folie, mit PA in Schicht 3; Verhältnis LDPE zu mLLDPE 70:30

| Schicht-Nummer | Zusammensetzung | Anteil in Schicht in % | Dicke in µm |
|---|---|---|---|
| 1 | Lupolen 3010 D | 100 | 25 |
| 2 | Admer NF498E | 100 | 3 |
| 3 | Durethan C38 F | 100 | 5 |
| 4 | Admer NF498E | 100 | 3 |
| 5 (Siegelschicht) | ● Lupolen 2420 F | ● 70 | 25 |
| | ● Exceed 1018 EB | ● 30 | |
| | | | Summe: 61 µm |

### Beispiel 3 (B3):

Peelfähige Folie, mit PA in Schicht 3; Verhältnis LDPE zu mLLDPE 90:10

| Schicht-Nummer | Zusammensetzung | Anteil in Schicht in % | Dicke in µm |
|---|---|---|---|
| 1 | Lupolen 3010 D | 100 | 25 |
| 2 | Admer NF498E | 100 | 3 |
| 3 | Durethan C38 F | 100 | 5 |
| 4 | Admer NF498E | 100 | 3 |
| 5 (Siegelschicht) | ● Lupolen 2420 F | ● 90 | 25 |
| | ● Exceed 1018 EB | ● 10 | |
| | | | Summe: 61 µm |

### Beispiel 4 (B4):

Peelfähige Folie, mit PA und EVOH; Verhältnis LDPE zu mLLDPE 80:20

| Schicht-Nummer | Zusammensetzung | Anteil in Schicht in % | Dicke in µm |
|---|---|---|---|
| 1 | Lupolen 3010 D | 100 | 25 |
| 2 | Admer NF498E | 100 | 3 |
| 3 | Durethan C38 F | 100 | 4 |
| 4 | EVALT101B | 100 | 5 |
| 5 | Durethan C38 F | 100 | 4 |
| 6 | Admer NF498E | 100 | 3 |
| 7 (Siegelschicht) | ● Lupolen 2420 F | ● 80 | 25 |
| | ● Exceed 1018 EB | ● 20 | |
| | | | Summe: 69 µm |

### Beispiel 5 (B5):

Peelfähige Folie, mit PA; Verhältnis LDPE zu mLLDPE 80:20

| Schicht-Nummer | Zusammensetzung | Anteil in Schicht in % | Dicke in µm |
|---|---|---|---|
| 1 | Lupolen 3010 D | 100 | 35 |
| 2 | Admer NF498E | 100 | 5 |
| 3 | Durethan C38 F | 100 | 10 |
| 4 | Admer NF498E | 100 | 5 |
| 5 (Siegelschicht) | ● Lupolen 2420 F | ● 80 | 35 |
| | ● Exceed 1018 EB | ● 20 | |
| | | | Summe: 90 µm |

### III. Prüfmethode

Die Folien aus den Vergleichsbeispielen V1-V3 und den Beispielen B1-B5 wurden jeweils mit einer 12 µm handelsüblichen OPET-Trägerfolie oder mit einer 15 µm handelsüblichen OPA-Trägerfolie kaschiert, um jeweils eine Deckelfolie (Verbundfolie) zu erhalten. Bei den Beispielen B1-B5 lag stets eine Deckelfolie mit einer 12 µm dicken OPET-Folie vor. Die Trägerfolien aus OPET oder OPA (auch OPP, CPA oder PBT ist verwendbar) haben keinen nennenswerten Einfluss auf die Siegelnahtfestigkeiten. Ebenso übten Barriereschichten (bei den meisten Folien eingebaut) aus entweder EVOH oder aus PA oder aus PA und EVOH keinen größeren Einfluss auf die Siegelnahtfestigkeiten aus.

Es wurde jeweils ein Folienstück mit den Abmessungen ca. 40x40 cm aus einer Deckelfolienbahn (jeweilige Trägerschicht sowie eine der Folien V1-V3 oder B1-B5) ausgeschnitten und längs bzw. quer zur Extrusionsrichtung gegen ein PP-Substrat (Vergleichsbeispiele V1-V3, Beispiele B1-B5, s.u.) gesiegelt. Als Siegelgerät wurde das Labor-Siegelgerät SGPE 20 der Fa. Kopp mit einer Siegelbackenbreite von 9 mm plan eingesetzt. Standardmäßig wurde mit einer Siegelkraft von 300 N, einer Siegelzeit von 1 s und einer Siegeltemperatur von 140 °C an beiden Siegelbalken gesiegelt. Die Breite der Siegelnaht betrug 15 mm.

Bei den Vergleichsfolien (V1-V3) mit Polypropylen-Siegelschicht und den Beispielen B1- B5 mit einer Siegelschicht basierend auf PE, genauer einer Mischung bestehend aus mindestens einem LDPE und mindestens einem mLLDPE, wurde die Folie gegen eine Standard-PP-Siegelfolie aus Moplen RP210G (Polypropylen Random-Copolymer) mit einer Dicke von 200 µm gesiegelt.

Mit dem Zwillingsschneider CUT 02 von Fa. Frank wurden aus den miteinander gesiegelten Folienverbünden (Trägerschicht kaschiert auf Siegelschicht aufweisende Folie, Siegelsubstrat) jeweils 15 mm breite Streifen geschnitten.

Es wurden jeweils in Längs- und Querrichtung jeweils mindestens drei Streifen mit der Universalprüfmaschine 2 81813 der Fa. Frank hinsichtlich ihrer Siegelnahtfähigkeit geprüft, nachdem die Probenkörper ca. 24 h im Normklima lagerten. Die Messungen zur Siegelnahtfestigkeit erfolgte in Anlehnung an die Norm DIN55529. Die Prüfung erfolgte mit einer Prüfgeschwindigkeit von 100 mm/min sowie einer Vorkraft von 0,5 N. Die maximale Kraft der Kraftmessdose betrug 200 N.

Wenn die Siegelnaht bei der Prüfung getrennt wurde, wurde ferner darauf geachtet, wie das Trennbild aussah (z. B. Folie bricht an Siegelkante, einzelne Schichten delaminieren, die Siegelnaht öffnet sich, ...).

Das Ablöseverhalten von Siegelnähten ist in der gängigen Praxis wie folgt definiert:

| Kraft/Siegelnahtbreite [N]/15 mm | Bezeichnung | Öffnungseigenschaften |
|---|---|---|
| Ab 1; besonders 4 - 6 N/15 mm | "soft peel" (sanftes Ablösen) | Siegelnaht ist sehr schwach und einfach zu öffnen |
| 6 - 10 N/15 mm | "easy peel" (einfaches Ablösen) | Siegelnaht ist einfach zu öffnen (kein Materialriss) |
| 10 - 20 N/15 mm | "peel" (Ablösen) | Siegelnaht kann nahezu ohne Materialriss geöffnet werden |
| > 20 N/15 mm | "tight sealing" (Festverschluss) | Materialriss, zerstörungsfrei nicht trennbar, hohe Kräfte |

### IV. Messergebnisse

Die ermittelten Siegelnahtwerte sind in der folgenden Tabelle wiedergegeben (Werte längs und quer waren identisch). In der zweiten Spalte sind Messungen im Labor mit 15 mm breiten Streifen wiedergegeben, in der dritten Spalte Beobachtungen an einem Eimer ohne Messgerät. Da der Eimer zur Bestimmung der Siegelnahtfestigkeit nicht in ein Messgerät eingespannt werden kann, muss man diese durch händisches Öffnen ermitteln. Daher sind die Angaben in der dritten Spalte der nachfolgenden Tabelle qualitativer Natur.

| Folie | Siegelnahtfestigkeit [N]/15 mm - gemessen | Siegelung gegen Eimer mit 2 mm Siegelbreite - Qualitative Einschätzung |
|---|---|---|
| V1: OPA/V1, 15:61 µm | 50 N/15 mm | Festverschluss |
| V2: OPET/V2, 12:51 µm | 45 N/15 mm | Festverschluss |
| V3: OPET/V3, 12:70 µm | 2 N/15 mm | Keine Siegelung bei Eimer |
| B1: OPET/B1, 12:61 µm | 12 N/15 mm | Peel |
| B2: OPET/B2, 12:61 µm | 15 N/15 mm | Peel |
| B3: OPET/B3, 12:61 µm | 8 N/15 mm | Easy Peel |
| B4: OPET/B4, 12:69 µm | 13 N/15 mm | Peel |
| B5: OPET/B5, 12:90 µm | 18 N/15 mm | Peel |

Wie oben ausgeführt, wurden bei den Folien aus den Vergleichsbeispielen V1 und V2 jeweils eine PP-Schicht gegen eine Substrat-Folie, deren Siegelschicht ebenfalls aus PP (Random-PP) bestand, mit einer Siegel-Breite von 15 mm gesiegelt. Bei V1 war die PP-Siegelschicht ein Homo-PP (Inspire 137), bei V2 ein heterophasiges PP (Moplen EP240H). In beiden Fällen wurde - wenig überraschend - ein Festverschluss erzielt. Es ist bekannt, dass gleiche Polymerklassen eine sehr gute Siegelfähigkeit zueinander besitzen. So ist es auch nicht weiter verwunderlich, dass PP auch gegen PP siegelt und zu einem Festverschluss führt. Bei den Vergleichsbeispielen V1 und V2 wurden daher Werte für die Siegelnahtfestigkeit von über 45 N/15 mm ermittelt.

Solch hohe Siegelnahtfestigkeiten sind für die Anwendung z.B. als schützende Deck- bzw. Deckelfolie für zum Beispiel Eimer aus Polypropylen nicht gewünscht, da sich die Deckelfolie beim Öffnen nicht mehr zerstörungsfrei entfernen lässt, um an den Inhalt des Eimers zu gelangen. Es ist zudem ein sehr hoher Kraftaufwand erforderlich. Daher ist die Zuhilfenahme von Messern, Scheren oder anderen Werkzeugen zur Öffnung notwendig, ohne welche die Deckelfolie nicht entfernt werden kann.

Im Vergleichsbeispiel V3 wurde Borpeel verwendet, einem eigens zur Siegelung gegen Polypropylen-Substrate entwickelten PP-Siegelmaterial (sog. "Adhesive Peel System"). Borpeel Grades wurden für coextrudierte Siegelschichten zur Herstellung von flexiblen oder steifen Deckelfolien bzw. Oberfolien entwickelt. Diese können gegen einen Container, einen Becher oder einen Tray (d.h. einer thermogeformten Unterfolie) aus PP oder gegen sich selbst gesiegelt werden. Die Verwendung von Borpeel führte aber auch nicht zum gewünschten Erfolg: Eine erfolgreiche Versiegelung bei dem nur schmalen Siegelrand eines Eimers (unter 2 mm Breite) war damit nicht zu realisieren. Obwohl bei der Siegelung in Form eines Streifens von 15 mm noch eine Siegelnahtfestigkeit von 2 N/15 mm gemessen werden konnte, fand bei einer Siegelung gegen den schmalen Siegelrand eines Eimers überhaupt keine Siegelung und somit kein Verschluss mehr statt. Die Siegelnahtfestigkeiten waren in diesem Fall zu gering.

Überraschenderweise wurde nun gefunden, dass man mit einer Mischung von bestimmten Polyethylen-Typen gegen Polypropylen ein geeignetes Peelverhalten erreichen kann. Überraschend war das deshalb, da Polyethylen PE normalerweise mit Polypropylen PP nicht gesiegelt werden kann. Dies gilt vor allem, wenn ein maßgeschneidertes Peelverhalten gewünscht ist und wenn insbesondere nur ein schmaler Siegelrand -wie es bei einem Eimer der Fall ist - zur Verfügung steht.

So wurde mit einer Mischung aus LDPE (Lupolen 2420 F) mit mLLDPE (Exceed 1018 FB) im Verhältnis 80:20 in der Siegelschicht gegen das Substrat aus Polypropylen (Moplen RP210G) eine Siegelnahtfestigkeit von 12 N/15 mm ermittelt (Beispiel B1). Ein derartiger Wert führt einerseits zu einer absolut dichten Versiegelung mit der schützenden Deckelfolie, so dass der Inhalt eines Eimers aus PP nicht auslaufen kann, und andererseits zu einem sehr einfachen Öffnungsverhalten beim Abziehen dieser Deckelfolie. Der Kraftaufwand ist durch das erfindungsgemäße Peel-System damit minimiert und die Folie kann ohne Rückstände und ohne Hilfsmittel in einfacher Weise vom Siegelrand abgezogen werden. Bei einem Eimer liegt regelmäßig ein Siegelrand nur mit einer Breite unter 2 mm vor, in manchen Fällen sogar unter 1,5 mm. Die erfindungsgemäße Folie eignet sich daher insbesondere für solche Siegelbereiche, die nur eine sehr geringe Breite aufweisen.

Bei Beispiel B2 wurde das Verhältnis der Mischung aus LDPE (Lupolen 2420 F) mit mLLDPE (Exceed 1018 FB) in der Siegelschicht der erfindungsgemäßen Folie auf 70:30 geändert. Dies führte mit 15 N/15 mm zu einer leicht höheren Siegelnahtfestigkeit bzw. zu einem leicht erhöhten Peelwert.

Bei Beispiel B3 wurde das Verhältnis der Mischung aus LDPE (Lupolen 2420 F) mit mLLDPE (Exceed 1018 FB) in der Siegelschicht der erfindungsgemäßen Folie auf 90:10 geändert. Dies führte mit 8 N/15 mm zu einer verringerten Siegelnahtfestigkeit bzw. zu einem niedrigeren Peelwert. Die Deckelfolie kann somit von einem Substrat aus PP, wie z.B. von einem Eimer, mit noch leichterem Kraftaufwand abgezogen werden.

Beispiel B4 wies eine 69 µm dicke 7-Schicht Folie mit PA und EVOH auf, die gegen eine 12 µm OPET-Folie kaschiert wurde. Im Rahmen der Messgenauigkeit fand sich mit 13 N/15 mm der gleiche Wert für die Siegelnahtfestigkeit, der bei Beispiel B1 gefunden wurde.

Dies zeigt, dass es für die Siegelnahtfestigkeit bei den erfindungsgemäßen Folien gegen ein Substrat aus Polypropylen überwiegend auf die Zusammensetzung der Siegelschicht ankommt, die bei Beispiel B1 und bei Beispiel B4 identisch waren (jeweils Mischung aus LDPE (Lupolen 2420 F) mit mLL-DPE (Exceed 1018 FB) im Verhältnis 80:20).

Beispiel B5 ist eine 90 µm dicke 5-Schicht Folie mit PA, die gegen eine 12 µm OPET-Folie kaschiert wurde. Durch die Erhöhung der Siegelschicht auf 35 µm fand sich bei der Siegelnahtfestigkeit (15 mm breiter Streifen) ein höherer Wert mit 18 N/15 mm. Wie zu erwarten, führt die Erhöhung der Dicke der Siegelschicht auch zu etwas höheren Werten bei der Siegelnahtfestigkeit. Obwohl die ermittelte Siegelnahtfestigkeit bei dem vorliegenden 15 mm breiten Streifen schon fast im Bereich eines Festverschlusses liegt, erhält man bei einem schmäleren Siegelrand unter 2 mm ein hervorragendes Peelverhalten und ein maßgeschneidertes leichtes Öffnungsverhalten der schützenden Deckfolie.

Insgesamt wird demnach mit der erfindungsgemäßen Folie offenbar ein sog. Adhäsiv- oder Grenzflächen-Peel erzielt, d.h. ein sauberer Trennvorgang zwischen Siegelmedium und Substrat (z.B. einem PP-Eimer) ohne Rückstände.

Im Rahmen dieser Erfindung wurde bei den erfindungsgemäßen peelfähigen Oberfolien bzw. Deckelfolien noch ein weiteres vorteilhaftes Verhalten bei nur schmalen Siegelbereichen festgestellt: Beim gängigen Siegeln auf einen Eimer mit einem Siegelrand in einer Breite unter 2 mm, insbesondere unter 1,5 mm, wurde festgestellt, dass sich die erfindungsgemäßen Folien auch außerhalb des Siegelbereichs, also zur Außenseite des Eimers, mit dem Eimer verbinden. Die erfindungsgemäßen Folien verschmelzen also auch an der Außenseite des Siegelbereichs mit dem Substrat. Die erfindungsgemäße Siegelschicht fließt hierbei über die Randbereiche hinaus, wenn die Stärke der Siegelschicht wenigstens 20 µm beträgt. Dies ist insofern sehr vorteilhaft, als dass damit ein noch sicherer Verschluss und eine nochmals erhöhte Abdichtung des Eimers mit den erfindungsgemäßen Deckelfolien erreicht werden kann.

Nach dem Aufsiegeln mit den erfindungsgemäßen Folien als Deckelfolien auf einen Eimer wird der Eimer zusätzlich mit einem Deckel verschlossen. Der Eimerdeckel schützt im Wesentlichen vor dem Auslaufen des Inhalts durch einen mechanischen Widerstand, etwa wenn der Eimer auf den Kopf gestellt wird. Diese mechanische Barriere für ein Auslaufen reicht alleine allerdings noch nicht aus, da sich der Inhalt des Eimers seinen Weg zwischen die Randbereiche des Eimerdeckels und des Eimers bahnen kann. Um dies zu vermeiden, muss es noch eine zusätzliche Abdichtung in Form einer wie oben beschriebenen Deckelfolie geben.

Bevorzugt weisen die erfindungsgemäßen Deckelfolien bei einem Eimer noch eine Abzugslasche auf, an der die Folie vom oberen Rand des Eimers abgezogen werden kann, nachdem der Deckel des Eimers entfernt wurde.

### Bezugszeichenliste

- 1: Siegelfolie
- 2: Siegelschicht
- 3: Außenschicht der Siegelfolie
- 4: Haftvermittlerschicht
- 5: Polyamidschicht
- 6: EVOH-Schicht
- 7: Trägerschicht
- 8: Deckelfolie
- 9: Lasche
- 10: Füllgut-Behälter
- 11: Siegelrand

## Patentansprüche

1. Siegelfolie zur Versiegelung gegen aus Polypropylen bestehende Füllgut-Behälter, wobei die Siegelfolie (1) aus mehreren Schichten (2, 3, 4, 5, 6) besteht, von denen eine Schicht eine zum Behälter weisende und gegen das Polypropylen zu siegelnde, peelfähige Siegelschicht (2) ist, **dadurch gekennzeichnet, dass** die Siegelschicht (2) aus einer Mischung besteht, welche mindestens ein LDPE und mindestens ein mLLDPE enthält.

2. Siegelfolie nach Anspruch 1, **dadurch gekennzeichnet, dass** LDPE in der Siegelschicht (2) mit einem Gew.-% Anteil von 50% bis 99.9%, vorzugsweise zwischen 60% und 98%, besonders bevorzugt zwischen 65% und 95%, ganz besonders bevorzugt zwischen 70% und 90%, enthalten ist.

3. Siegelfolie nach Anspruch 1 oder 2, **dadurch gekennzeichnet, dass** mLLDPE in der Siegelschicht (2) mit einem Gew.-% Anteil von 0,1% bis 50%, vorzugsweise zwischen 2% und 40%, besonders bevorzugt zwischen 5% und 35%, ganz besonders bevorzugt zwischen 10% und 30%, enthalten ist.

4. Siegelfolie nach einem der vorhergehenden Ansprüche, **dadurch gekennzeichnet, dass** die Siegelnahtfestigkeit gegen Polypropylen kleiner ist als 20 N/15 mm, bevorzugt kleiner als 15 N/15 mm, gemessen nach DIN55529.

5. Siegelfolie nach einem der vorhergehenden Ansprüche, **dadurch gekennzeichnet, dass** der Schmelzpunkt des mindestens einen LDPE größer ist als 110°C, gemessen nach DIN53765.

6. Siegelfolie nach einem der vorhergehenden Ansprüche, **dadurch gekennzeichnet, dass** der Schmelzpunkt des mindestens einen mLLDPE größer ist als 110°C, gemessen nach DIN53765.

7. Siegelfolie nach einem der vorhergehenden Ansprüche, **dadurch gekennzeichnet, dass** eine oder mehrere Schichten der Siegelfolie (1) eine Barriere bilden, wobei die Barriere vorzugsweise mindestens eine Polyamidschicht (5) und/oder mindestens eine EVOH-Schicht (6) und/oder mindestens eine Beschichtung, beispielsweise aus Aluminium oder SiOₓ, enthält.

8. Siegelfolie nach einem der vorhergehenden Ansprüche, **dadurch gekennzeichnet, dass** die Siegelschicht (2) eine Dicke von mehr als 10 µm, vorzugsweise von mehr als 20 µm, aufweist.

9. Siegelfolie nach einem der vorhergehenden Ansprüche, **dadurch gekennzeichnet, dass** die Siegelschicht (2) eine Dicke von mehr als 30 µm, vorzugsweise von mehr als 35 µm, aufweist.

10. Deckelfolie (8) zum Verschließen und Versiegeln eines Füllgut-Behälters (10), mit einer Siegelfolie (1) nach einem der vorhergehenden Ansprüche sowie mindestens einer Trägerschicht (7), welche auf die besagte Siegelfolie (1) aufkaschiert ist.

11. Deckelfolie nach dem Anspruch 10, **dadurch gekennzeichnet, dass** die mindestens eine Trägerschicht (7) eine OPET-Folie (orientiertes Polyester), eine OPA-Folie (orientiertes Polyamid), eine CPA-Folie (Cast Polyamid), eine PBT-Folie (Polybutylenterephthalat) oder eine OPP-Folie (orientiertes Polypropylen) ist.

12. Deckelfolie nach einem der beiden vorhergehenden Ansprüche, **dadurch gekennzeichnet, dass** die Trägerschicht (7) eine Dicke von 5 µm bis 100 µm aufweist, vorzugsweise zwischen 10 µm und 75 µm, bevorzugt zwischen 10 µm und 30 µm.

13. Füllgut-Behälter (10) aus Polypropylen bestehend, **dadurch gekennzeichnet, dass** er mit einer Deckelfolie (8) nach einem der beiden vorhergehenden Ansprüche versiegelt und mit einem Verschlussdeckel, der über der Deckelfolie (8) platziert ist, verschlossen ist.

14. Füllgut-Behälter nach Anspruch 13, **dadurch gekennzeichnet, dass** die Breite (b) des Siegelrandes (11), welcher die Kontaktfläche zwischen dem Behälterrand des Füllgut-Behälters (10) und der Deckelfolie (8) wiedergibt, kleiner als 2,5 mm, vorzugsweise kleiner als 2 mm, besonders bevorzugt kleiner als 1,5 mm, ist.

15. Verwendung einer Siegelfolie oder einer Deckelfolie nach einem der vorhergehenden Ansprüche zur Versiegelung bzw. Verdeckelung eines Behälters aus Polypropylen.
